(19) **Europäisches Patentamt**
**European Patent Office**
**Office européen des brevets**

(11) **EP 4 167 226 B1**

(12) **EUROPEAN PATENT SPECIFICATION**

(45) Date of publication and mention
of the grant of the patent:
**11.02.2026 Bulletin 2026/07**

(21) Application number: **22773390.4**

(22) Date of filing: **22.03.2022**

(51) International Patent Classification (IPC):
*G10L 21/013* (2013.01)     *G10H 1/36* (2006.01)
*G10L 25/30* (2013.01)      *G10L 21/0272* (2013.01)
*G10L 25/24* (2013.01)      *G10L 25/09* (2013.01)

(52) Cooperative Patent Classification (CPC):
**G10L 21/013; G10H 1/366; G10L 25/30;**
G10H 2210/041; G10H 2210/331; G10H 2250/311;
G10H 2250/455; G10L 21/0272; G10L 25/09;
G10L 25/24; Y02D 30/70

(86) International application number:
**PCT/CN2022/082305**

(87) International publication number:
**WO 2023/024501 (02.03.2023 Gazette 2023/09)**

(54) **AUDIO DATA PROCESSING METHOD AND APPARATUS, AND DEVICE AND STORAGE MEDIUM**

AUDIODATENVERARBEITUNGSVERFAHREN UND -VORRICHTUNG SOWIE VORRICHTUNG UND SPEICHERMEDIUM

PROCÉDÉ ET APPAREIL DE TRAITEMENT DE DONNÉES AUDIO, ET DISPOSITIF ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2021 CN 202110978065**

(43) Date of publication of application:
**19.04.2023 Bulletin 2023/16**

(73) Proprietor: **BEIJING BAIDU NETCOM SCIENCE TECHNOLOGY CO., LTD.**
**Beijing 10085 (CN)**

(72) Inventors:
• **WANG, Yipeng**
  **Beijing 100085 (CN)**
• **LIU, Yunfeng**
  **Beijing 100085 (CN)**

(74) Representative: **Zinkler, Franz et al**
**Schoppe, Zimmermann, Stöckeler Zinkler, Schenk & Partner mbB Patentanwälte**
**Radlkoferstrasse 2**
**81373 München (DE)**

(56) References cited:
| | |
|---|---|
| CN-A- 103 440 862 | CN-A- 108 417 228 |
| CN-A- 108 922 506 | CN-A- 111 370 019 |
| CN-A- 111 899 706 | CN-A- 112 086 085 |
| CN-A- 113 689 837 | CN-U- 212 660 311 |
| JP-A- 2004 212 473 | US-A1- 2007 027 682 |

• **IKEMIYA YUKARA ET AL: "Singing voice analysis and editing based on mutually dependent F0 estimation and source separation", 2015 IEEE INTERNATIONAL CONFERENCE ON ACOUSTICS, SPEECH AND SIGNAL PROCESSING (ICASSP), IEEE, 19 April 2015 (2015-04-19), pages 574 - 578, XP033186827, [retrieved on 20150804], DOI: 10.1109/ICASSP.2015.7178034**

- COHEN-HADRIA ALICE ET AL: "Voice Anonymization in Urban Sound Recordings", 2019 IEEE 29TH INTERNATIONAL WORKSHOP ON MACHINE LEARNING FOR SIGNAL PROCESSING (MLSP), IEEE, 13 October 2019 (2019-10-13), pages 1 - 6, XP033645862, [retrieved on 20191202], DOI: 10.1109/MLSP.2019.8918913
- YI LUO ET AL: "Deep Clustering and Conventional Networks for Music Separation: Stronger Together", ARXIV.ORG, CORNELL UNIVERSITY LIBRARY, 201 OLIN LIBRARY CORNELL UNIVERSITY ITHACA, NY 14853, 18 November 2016 (2016-11-18), XP081363599, DOI: 10.1109/ICASSP.2017.7952118
- LOSCOS ALEX: "SPECTRAL PROCESSING OF THE SINGING VOICE", A DISSERTATION SUBMITTED TO THE DEPARTMENT OF INFORMATION AND COMMUNICATION TECHNOLOGIES FROM THE POMPEU FABRA UNIVERSITY IN PARTIAL FULFILLMENT OF THE REQUIREMENTS FOR THE DEGREE OF DOCTOR PER LA UNIVERSITAT POMPEU FABRA, 1 January 2007 (2007-01-01), pages 1 - 165, XP055824388, Retrieved from the Internet <URL:https://www.tdx.cat/bitstream/handle/10803/7542/talm.pdf> [retrieved on 20210714]
- "DAFX: Digital Audio Effects", 11 March 2011, JOHN WILEY & SONS, LTD, Chichester, UK, ISBN: 978-0-47-066599-2, article V. VERFAILLE ET AL: "Adaptive Digital Audio Effects", pages: 321 - 391, XP055096267, DOI: 10.1002/9781119991298.ch9
- COREY CHENG: "Design of a pitch quantization and pitch correction system for real-time music effects signal processing", SIGNAL&INFORMATION PROCESSING ASSOCIATION ANNUAL SUMMIT AND CONFERENCE (APSIPA ASC), 2012 ASIA-PACIFIC, IEEE, 3 December 2012 (2012-12-03), pages 1 - 6, XP032310043, ISBN: 978-1-4673-4863-8
- TERRY M ET AL: "AUTOMATED QUERY IDENTIFICATION IN ENGLISH DIALOGUE", ICSLP 94 : 1994 INTERNATIONAL CONFERENCE ON SPOKEN LANGUAGE PROCESSING. YOKOHAMA, JAPAN, SEPT. 18 - 22, 1994; [INTERNATIONAL CONFERENCE ON SPOKEN LANGUAGE PROCESSING. (ICSLP)], YOKOHAMA : ASJ, JP, vol. 2, 18 September 1994 (1994-09-18), pages 891 - 894, XP000855393
- YU KRISTINE M: "The role of time in phonetic spaces: Temporal resolution in Cantonese tone perception", JOURNAL OF PHONETICS, vol. 65, 2017, pages 126 - 144, XP085273213, ISSN: 0095-4470, DOI: 10.1016/J.WOCN.2017.06.004

**Description**

TECHNICAL FIELD

The present disclosure relates to a field of audio processing technology, and in particular, to a field of speech synthesis technology.

BACKGROUND

An electroacoustic effect may be used as a sound filter to adjust and beautify a sound, and have a wide range of applications in scenes such as a K song work or a small video work. A high-quality electroacoustic effect can improve a sound quality of a work. If an application product can provide the high-quality electroacoustic effect, it may enhance the competitiveness of the product, enrich the gameplay of the product, and increase the interest of users.

IKEMIYA YUKARA ET AL: "Singing voice analysis and editing based on mutually dependent F0 estimation and source separation", 2015 IEEE INTERNATIONAL CONFERENCE ON ACOUSTICS. SPEECH AND SIGNAL PROCESSING (ICASSP), IEEE, 19 April 2015 (2015-04-19), pages 574-578, XP033186827, DOI: 10.11 09/ICASSP.2015.7178034 [retrieved on 2015-08-04] discloses a novel framework that improves both vocal fundamental frequency (FO) estimation and singing voice separation by making effective use of the mutual dependency of those two tasks. A typical approach to singing voice separation is to estimate the vocal FO contour from a target music signal and then extract the singing voice by using a time-frequency mask that passes only the harmonic components of the vocal FOs and overtones. Vocal FO estimation, on the contrary, is considered to become easier if only the singing voice can be extracted accurately from the target signal. Such mutual dependency has scarcely been focused on in most conventional studies. To overcome this limitation, our framework alternates those two tasks while using the results of each in the other. More specifically, IKEMIYA YUKARA ET AL first extract the singing voice by using robust principal component analysis (RPCA). The FO contour is then estimated from the separated singing voice by finding the optimal path over a FOsaliency spectrogram based on subharmonic summation (SHS). This enables us to improve singing voice separation by combining a timefrequency mask based on RPCA with a mask based on harmonic structures. Experimental results obtained when IKEMIYA YUKARA ET AL used the proposed technique to directly edit vocal FOs in popular-music audio signals showed that it significantly

COHEN-HAORIA ALICE ET AL: "Voice Anonymization in Urban Sound Recordings", 2019 IEEE 29TH INTERNATIONAL WORKSHOP ON MACHINE LEARNING FOR SIGNAL PROCESSING (MLSP), IEEE, 13 October 2019 (2019-10-13), pages 1-6, XP033645862 DOI: 10.1109/MLSP.2019.8918913 [retrieved on 2019-12-02] discloses that monitoring health and noise pollution in urban environments often entails deploying acoustic sensor networks to passively collect data in public spaces. Although spaces are technically public, people in the environment may not fully realize the degree to which they may be recorded by the sensor network, which may be perceived as a violation of expected privacy. Therefore, COHEN-HAORIA ALICE ET AL propose a method to anonymize and blur the voices of people recorded in public spaces-a novel, yet increasingly important task as acoustic sensing becomes ubiquitous in sensor-equipped smart cities. This method is analogous to Google's face blurring in its Street View photographs, which arose from similar concerns in the visual domain. The proposed blurring method aims to anonymize voices by removing both the linguistic content and personal identity from voices, while preserving the rest of the acoustic scene. The method consists of a three-step process. First, voices are separated from non-voice content by a deep U-Net source separation model. Second, COHEN-HAORIA ALICE ET AL evaluate two approaches to obscure the identity and intelligibility of the extracted voices: a low pass filter to remove most of the formants in the voices, and an inversion of Mel-Frequency Cepstral Coefficients (MFCC). Finally, the blurred vocal content is mixed with the separated non-vocal signal to reconstruct the acoustic scene. Using background recordings from a real urban acoustic sensor network in New York City, COHEN-HAORIA ALICE ET AL present a complete evaluation of our method, with automatic speech recognition, speaker identification, sound event detection, and human perceptual evaluation.

US2007/027682A1 discloses an audio information processing system, which when incorporated in home audio video systems, provides independent volume control capability, independent equalization setting capability and independent special effects capability of voice and background sound, to the home audio-video system. The audio information processing system receives an audio signal and extracts there from a voice signal and a background signal based upon correlation of language tracks, correlation of a center channel with surround sound channels, via a voice detection circuit, or via other means. Once the voice signal and background signal are determined, separate processing is performed, and combining of the separately processed voice and background signals may be performed.

YI LUO ET AL: "Deep Clustering and Conventional Networks for Music Separation: Stronger Together", ARXIVORG. CORNELL UNIVERSITY LIBRARY. 201 OLIN LIBRARY CORNELL UNIVERSITY ITHACA, NY 14853, 18 November 2016 (2016-11-18), XP081363599, DOI: 10.1109/ICASSP.2017.7952118 discloses that deep clustering is the first method to handle general audio separation scenarios with multiple sources of the same type and an arbitrary number of sources, performing impressively in speaker-independent speech separation tasks. However, little is known about its effectiveness in other challenging situations such as music source separation. Contrary to conventional networks that directly estimate the source signals, deep clustering generates an embedding for each time-frequency bin, and separates sources by clustering the bins in the embedding space. We show that deep clustering outperforms conventional networks on a singing voice separation task, in both matched and mismatched conditions, even though conventional networks have the advantage of end-to-end training for best signal approximation, presumably because its more flexible objective engenders better regularization. Since the strengths of deep clustering and conventional network architectures appear complementary, we explore combining them in a single hybrid network trained via an approach akin to multi-task learning. Remarkably, the combination significantly outperforms either of its components.

SUMMARY

The invention is set out by the appended set of claims. The present disclosure provides a method and an apparatus of processing audio data, a device, a storage medium, and a program product.

According to an aspect of the present disclosure, a method of processing audio data according to claim 1 is provided.

According to another aspect of the present disclosure, an electronic device according to claim 6 is provided.

According to another aspect of the present disclosure, a non-transitory computer-readable storage medium having computer instructions according to claim is provided.

According to another aspect of the present disclosure, a computer program product containing a computer program or instructions according to claim 8 is provided.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used to understand the present disclosure better and do not constitute a limitation to the present disclosure, wherein:

FIG. 1 schematically shows a flowchart of a method of processing audio data according to an embodiment of the present disclosure;
FIG. 2 schematically shows a flowchart of a method of decomposing original audio data according to an embodiment of the present disclosure;
FIG. 3 schematically shows a flowchart of a method of performing electroacoustic processing on voice audio data according to an embodiment of the present disclosure;
FIG. 4 schematically shows a flowchart of a method of processing audio data according to another embodiment of the present disclosure;
FIG. 5 schematically shows a block diagram of an apparatus of processing audio data according to an embodiment of the present disclosure; and
FIG. 6 schematically shows a block diagram of an example electronic device for implementing embodiments of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

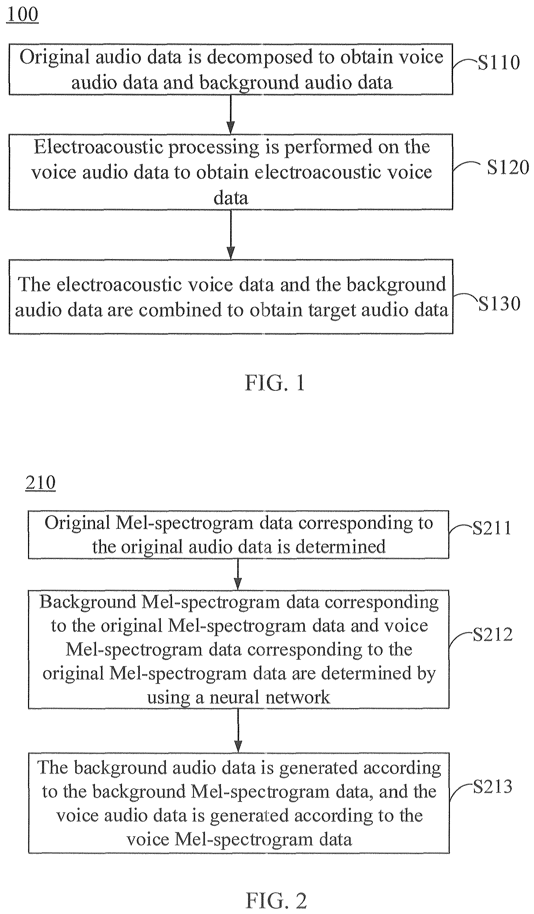

A method of processing audio data according to an embodiment of the present disclosure will be described below with reference to FIG. 1. It should be noted that, in the technical solutions of the present disclosure, the collection, storage, use, processing, transmission, provision and disclosure of audio data and other data involved comply with relevant laws and regulations, and do not violate public order and good customs.

FIG. 1 schematically shows a flowchart of a method of processing audio data according to an embodiment of the present disclosure.

As shown in FIG. 1, a method 100 of processing audio data includes operations S110 to S130.

In operation S110, original audio data is decomposed to obtain voice audio data and background audio data.

In operation S120, electroacoustic processing is performed on the voice audio data to obtain electroacoustic voice data.

In operation S130, the electroacoustic voice data and the background audio data are combined to obtain target audio data.

According to an embodiment of the present disclosure, the original audio data may include, for example, voice information and background sound information, where the voice may be, for example, singing, and the background sound may be, for example, accompaniment music. In this embodiment, the voice information in the original audio data and the background information in the original audio data may be separated by using, for example, a sound source separation algorithm, so as to obtain voice audio data including the voice information and background audio data including the background sound information.

According to an embodiment of the present disclosure, by separating the voice information and the background sound information in the original audio data, performing electroacoustic processing on the voice information, and combining the electroacoustic voice information and the background sound information, it is possible to achieve the electro-acousticization of audio data having both background sound information and the voice information.

According to an embodiment of the present disclosure, a neural network may be used to implement the sound source separation algorithm to decompose the original audio data. An input of the neural network may be the audio data having the background sound information and the voice information. An output of the neural network may include the voice audio data containing the voice information and the background audio data containing the background sound information.

According to an embodiment of the present disclosure, a music file and a voice file may be acquired in advance. The music file and the voice file may be cut into segments of equal length to obtain a plurality of music segments X and a plurality of voice segments Y. Each music segment X and corresponding one voice segment Y may be combined to obtain original audio data Z. The neural network is trained with each original audio data Z as the input of the neural network, and the music segment X and the voice segment Y corresponding to the original audio data Z as a desired output. In addition, in order to improve the training effect and speed up the network convergence, the music segment X, the voice segment Y and the original audio data Z may be pre-processed into Mel-spectrogram. The output of the neural network is also based on the Mel-spectrogram. For example, an output result in a form of Mel-spectrogram may synthesize corresponding original audio data by using an algorithm such as a Griffin-Lim algorithm.

Based on this, a method of decomposing original audio data shown above will be further described below with reference to FIG. 2 in conjunction with specific embodiments. Those skilled in the art may understand that the following exemplary embodiments are only for understanding the present disclosure, and the present disclosure is not limited thereto.

FIG. 2 schematically shows a flowchart of a method of decomposing original audio data according to an embodiment of the present disclosure.

As shown in FIG. 2, a method 210 of decomposing original audio data includes operations S211 to S213.

In operation S211, original Mel-spectrogram data corresponding to the original audio data is determined.

In operation S212, background Mel-spectrogram data corresponding to the original Mel-spectrogram data and voice Mel-spectrogram data corresponding to the original Mel-spectrogram data are determined by using a neural network.

According to an embodiment of the present disclosure, the background Mel-spectrogram data may include background sound information in the original Mel-spectrogram data. The voice Mel-spectrogram data may include voice information in the original Mel-spectrogram data.

In operation S213, the background audio data is generated according to the background Mel-spectrogram data, and the voice audio data is generated according to the voice Mel-spectrogram data.

According to an embodiment of the present disclosure, the background audio data may be generated according to the background Mel-spectrogram data by using the algorithm such as the Griffin-Lim algorithm. The voice audio data may be generated according to the voice Mel-spectrogram data by using the algorithm such as the Griffin-Lim algorithm.

According to an embodiment of the present disclosure, the electroacoustic processing on the voice audio data may be achieved by performing quantization processing on a fundamental frequency of voice data. For example, the fundamental frequency, a spectral envelope and an aperiodic parameter of the voice data may be determined. The fundamental frequency represents a vibration frequency of a vocal cord during pronunciation, which is reflected in the audio frequency as a pitch. Next, the fundamental frequency may be quantized. The voice data may be re-synthesized according to the quantized fundamental frequency, the spectral envelope and the aperiodic parameter, so as to achieve performing the electroacoustic processing on the voice audio data. The re-synthesized voice data is electroacoustic voice data containing voice information with an electroacoustic effect.

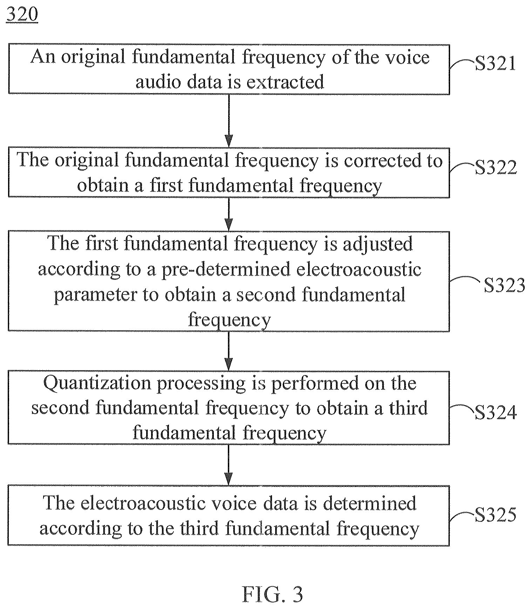

A method of performing the electroacoustic processing on the voice audio data shown above will be further described below with reference to FIG. 3 in conjunction with specific embodiments. Those skilled in the art may understand that the following exemplary embodiments are only for understanding the present disclosure, and the present disclosure is not limited thereto.

FIG. 3 schematically shows a flowchart of a method of performing electroacoustic processing on voice audio data according to an embodiment of the present disclosure.

As shown in FIG. 3, a method 320 of performing electroacoustic processing on voice audio data includes operations S321 to S325.

In operation S321, an original fundamental frequency of the voice audio data is extracted.

According to an embodiment of the present disclosure, for example, the original fundamental frequency may be extracted from the voice audio data according to an algorithm such as DIO, Harvest, etc.

In operation S322, the original fundamental frequency is corrected to obtain a first fundamental frequency.

According to an embodiment of the present disclosure, the electroacoustic effect may be improved by correcting the fundamental frequency. The voice audio data is divided into a plurality of audio segments. Then, for each audio segment of the plurality of audio segments, an energy of the audio segment and a zero-crossing rate of the audio segment are determined. According to the energy of the audio segment and the zero-crossing rate of the audio segment, whether the audio segment is a voiced audio segment or not is determined. Then, a fundamental frequency of the voiced audio segment is corrected by using a linear interpolation algorithm.

According to an embodiment of the present disclosure, the voice audio data may be divided into the plurality of audio segments based on a preset unit length. A length of each audio segment is one preset unit length. The preset unit length may be set as desired in practice. For example, in this embodiment, the preset unit length may be any value in a range from 10 ms to 40 ms.

According to an embodiment of the present disclosure, the audio segment includes a plurality of sampling points. The energy of the audio segment may be determined according to a value of each sampling point in the audio segment. For example, the energy of the audio segment may be calculated according to the following equation:

$$E = \sqrt{\frac{\sum_{i=1}^{n} x_i^2}{n}},$$

wherein $x_i$ represents a value of the $i^{th}$ sampling point, and n is the number of sampling points.

According to an embodiment of the present disclosure, the number n of sampling points may be determined according to the length of the audio segment and a sampling rate for the audio segment. Taking a preset unit length of 10 ms as an example, the number n of sampling points may be calculated according to:

$$n = 10/1000 * sr = 0.01sr,$$

wherein sr represents the sampling rate for the audio.

According to an embodiment of the present disclosure, for every set of two adjacent sampling points in the audio segment, it is determined whether one of the two adjacent sampling points has a positive value and the other one of the two adjacent sampling points has a negative value. Then, a ratio of a number of sets of two adjacent sampling points having a positive value and a negative value respectively to a total number of the sampling points in the audio segment is determined as the zero-crossing rate.

According to an embodiment of the present disclosure, the zero-crossing rate of the audio segment may be calculated according to the following equation:

$$ZCR = \frac{\sum_{i=1}^{n-1}(x_i * x_{i-1} < 0)}{n},$$

wherein ZCR is the zero-crossing rate of the audio segment, n is the number of sampling points in the audio segment, $x_i$ represents the value of the $i^{th}$ sampling point in the audio segment, and $x_{i-1}$ represents a value of the $(i-1)^{th}$ sampling point in the audio segment.

According to an embodiment of the present disclosure, the number n of sampling points may be determined according to the length of the audio segment and the sampling rate for the audio segment. Taking the preset unit length of 10 ms as an example, the number n of sampling points may be calculated according to:

$$n = 10/1000 * sr = 0.01sr$$,

wherein sr represents the sampling rate for the audio.

When a body is pronouncing, as the vocal cord does not vibrate for unvoiced vocalizations, a corresponding fundamental frequency is zero, and as the vocal cord vibrates for voiced vocalizations, a corresponding fundamental frequency is not zero. Based on this, in this embodiment, the fundamental frequency may be corrected by using the above characteristics.

For example, for each audio segment, if an energy E of the audio segment is less than a threshold e_min and a zero-crossing rate ZCR of the audio segment is greater than a threshold zer_max, then the audio segment is an unvoiced audio segment having a fundamental frequency of zero. Otherwise, the audio segment is a voiced audio segment having a fundamental frequency of non-zero, where e_min and zcr_max may be set as desired in practice.

For each unvoiced audio segment, a fundamental frequency of the unvoiced audio segment may be set to zero. For each voiced audio segment, a fundamental frequency of each voiced audio segment may be extracted according to an algorithm such as DIO, Harvest, etc., and then it is determined whether the fundamental frequency value of each voiced audio segment is zero or not. For a voiced audio segment having the fundamental frequency value of zero, linear interpolation may be performed, based on a linear interpolation algorithm, by using a value of a voiced audio segment near the voiced audio segment, so as to obtain a non-zero fundamental frequency value as the fundamental frequency value of the voiced audio segment.

For example, there are six voiced audio segments, and fundamental frequency values of the six voiced audio segments are 100, 100, 0, 0, 160, and 100, respectively. As the fundamental frequency value of the third voiced audio segment and the fundamental frequency value of the fourth voiced audio segment are zero, linear interpolation may be performed according to a non-zero fundamental frequency value near the fundamental frequency values of the third and fourth voiced audio segments, that is, linear interpolation may be performed according to the second fundamental frequency value of 100 and the fifth fundamental frequency value of 160. In this way, the obtained fundamental frequency value of the third audio segment and fundamental frequency value of the fourth voiced audio segment are 120 and 140, respectively. That is, the corrected six fundamental frequency values are 100, 100, 120, 140, 160, and 100, respectively.

Then, in operation S323, the first fundamental frequency is adjusted according to a pre-determined electroacoustic parameter to obtain a second fundamental frequency.

According to an embodiment of the present disclosure, the pre-determined electroacoustic parameter includes an electroacoustic degree parameter and/or an electroacoustic tone parameter. The electroacoustic degree parameter may be used to control the electroacoustic degree. The electroacoustic tone parameter may be used to control the tone. For example, in this embodiment, the electroacoustic degree parameter may include, for example, 1, 1.2, and 1.4. The greater the electroacoustic degree parameter is, the better the electroacoustic effect is. The electroacoustic tone parameter may include, for example, -3, -2, -1, +1, +2, and +3, where -1, -2, -3 represent one tone down, two tones down, and three tones down, respectively; +1, +2, and +3 represent one tone up, two tones up, and three tones up, respectively.

In related art, a parameter for the electroacoustic effect cannot be adjusted, and thus the effect is single. According to an embodiment of the present disclosure, based on the electroacoustic characteristics, the electroacoustic degree parameter and the electroacoustic tone parameter are provided to control the electroacoustic effect, so that different user desires may be satisfied.

According to an embodiment, a fundamental frequency variance and/or a fundamental frequency mean value is/are determined according to the fundamental frequency of the voiced audio segment. A corrected fundamental frequency variance is determined according to the electroacoustic degree parameter and the fundamental frequency variance, and/or a corrected fundamental frequency mean value is determined according to the electroacoustic tone parameter and the fundamental frequency mean value. Then, the first fundamental frequency is adjusted according to the corrected fundamental frequency variance and/or the corrected fundamental frequency mean value, to obtain the second fundamental frequency.

For example, in this embodiment, the variance of the fundamental frequencies of all voiced audio segments may be calculated as the fundamental frequency variance. The mean value of the fundamental frequencies of all the voiced audio segments may be calculated as the fundamental frequency mean value.

Then, the corrected fundamental frequency variance may be calculated according to:

$$new\_var = var * a$$,

wherein new_var is the corrected fundamental frequency variance, var is the fundamental frequency variance, and a is the electroacoustic degree parameter.

The corrected fundamental frequency mean value may be calculated according to:

$$new\_mean = mean * 2^{b/12},$$

wherein new mean is the corrected fundamental frequency mean value, mean is the fundamental frequency mean value, and b is the electroacoustic tone parameter.

Then, the second fundamental frequency may be calculated according to:

$$F0' = \frac{F0 - mean}{var} * new\_var + new\_mean ,$$

wherein F0' is the second fundamental frequency.

In operation S324, quantization processing is performed on the second fundamental frequency to obtain a third fundamental frequency.

In natural audio, the tone of the sound is cadence and changes gradually, while in the electroacoustic audio, the tone is quantized to a specific scale, so that the tone does not change continuously, which is similar to a tone produced by an electronic musical instrument. Based on this, according to an embodiment of the present disclosure, the fundamental frequency of the voice data may be quantized by taking each key frequency of a piano as a target frequency.

In this embodiment, a frequency range is determined according to:

$$scale = 1 + 12 * \log_2(\frac{F0'}{27.5}),$$

wherein scale is the frequency range, and F0' is the second fundamental frequency.

Then, based on the frequency range, the third fundamental frequency is determined according to:

$$F0'' = 27.5 * 2^{(\frac{scale-1}{12})},$$

wherein F0" is the third fundamental frequency.

In operation S325, the electroacoustic voice data is determined according to the third fundamental frequency.

According to an embodiment of the present disclosure, a spectral envelope and an aperiodic parameter may be determined according to the voice audio data and the first fundamental frequency. Then, the electroacoustic voice data may be determined according to the third fundamental frequency, the spectral envelope and the aperiodic parameter.

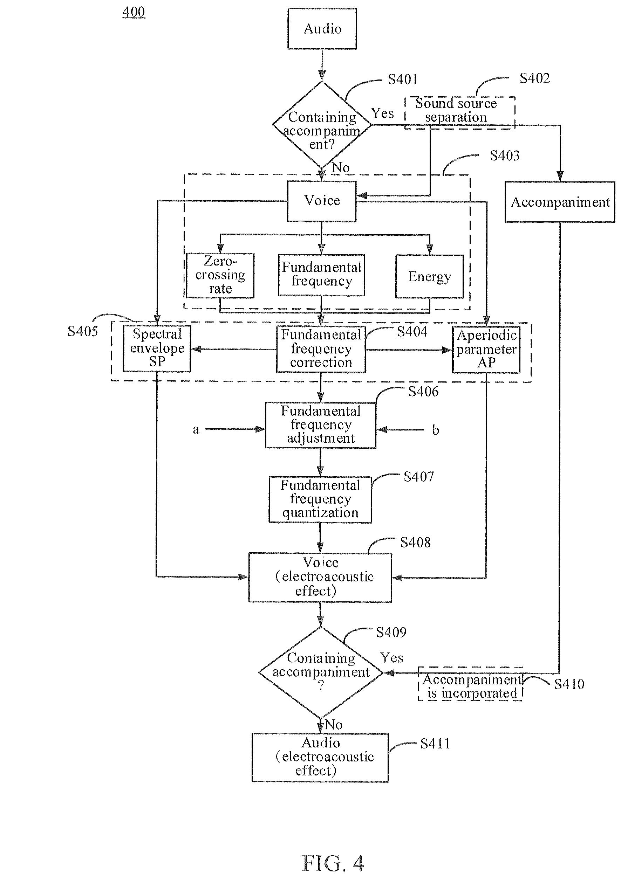

The method of processing audio data described above will be further described below with reference to FIG. 4 in conjunction with specific embodiments. Those skilled in the art may understand that the following exemplary embodiments are only for understanding the present disclosure, and the present disclosure is not limited thereto.

FIG. 4 schematically shows a flowchart of a method of processing audio data according to another embodiment of the present disclosure.

As shown in FIG. 4, a method 400 of processing audio data includes operations S401 to S411.

In operation S401, it is determined whether the audio data (audio for short) contains accompaniment music (accompaniment for short) or not. If the accompaniment is contained, operation S402 is performed. If only voice is contained and no accompaniment is contained, then operation S403 is performed.

In operation S402, the voice is separated from the accompaniment by using the sound source separation algorithm. Then, operation S403 is performed for the separated voice.

In operation S403, a zero-crossing rate, a fundamental frequency f0 and an energy are extracted for the voice.

In operation S404, the fundamental frequency is corrected based on the zero-crossing rate and the energy to obtain F0.

In operation S405, a spectral envelope SP and an aperiodic parameter AP are calculated by using the voice and the corrected fundamental frequency F0.

In operation S406, the fundamental frequency is adjusted to obtain F0' according to an electroacoustic degree parameter a and an electroacoustic tone parameter b set by a user.

In operation S407, the fundamental frequency F0' is quantized to obtain F0".

In operation S408, a voice with electroacoustic effect is synthesized by using the fundamental frequency F0", the spectral envelope SP and the aperiodic parameter AP.

In operation S409, if the audio contains the accompaniment, operation S410 is performed. Otherwise, operation S411 is performed.

In operation S410, the accompaniment is also combined into the voice to generate a final audio with electroacoustic effect.

In operation S411, the audio with the electroacoustic effect is output.

According to the method of processing audio data of the embodiment of the present disclosure, it is possible to flexibly and efficiently add the electroacoustic effect to the audio data, and improve the entertainment interest of users.

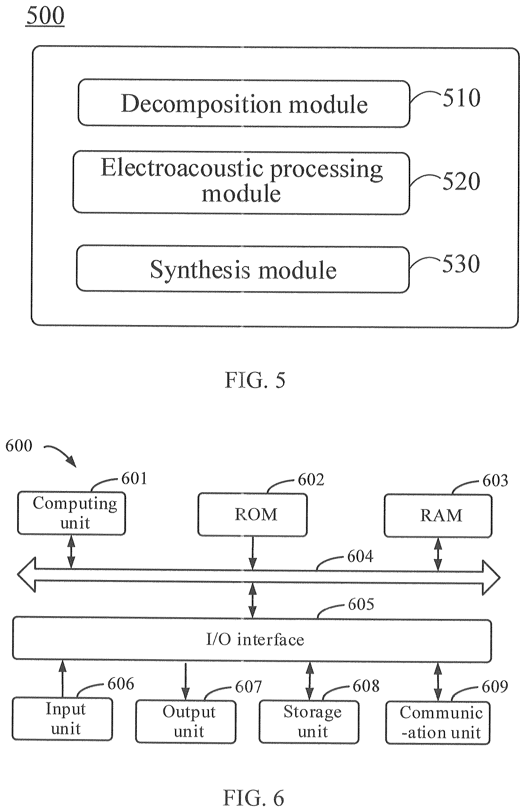

FIG. 5 schematically shows a block diagram of an apparatus of processing audio data according to an embodiment of the present disclosure.

As shown in FIG. 5, an apparatus 500 of processing audio data includes a decomposition module 510, an electroacoustic processing module 520 and a synthesis module 530.

The decomposition module 510 is used to decompose original audio data to obtain voice audio data and background audio data.

The electroacoustic processing module 520 is used to perform electroacoustic processing on the voice audio data to obtain electroacoustic voice data.

The synthesis module 530 is used to combine the electroacoustic voice data and the background audio data to obtain target audio data.

According to an embodiment of the present disclosure, the decomposition module may include a Mel-spectrogram determination sub-module, a decomposition sub-module and a generation sub-module. The Mel-spectrogram determination sub-module is used to determine original Mel-spectrogram data corresponding to the original audio data. The decomposition sub-module is used to determine, by using a neural network, background Mel-spectrogram data corresponding to the original Mel-spectrogram data and voice Mel-spectrogram data corresponding to the original Mel-spectrogram data. The generation sub-module is used to generate the background audio data according to the background Mel-spectrogram data, and generate the voice audio data according to the voice Mel-spectrogram data.

According to an embodiment of the present disclosure, the electroacoustic processing module may include an extraction sub-module, a correction sub-module, an adjustment sub-module, a quantization sub-module and an electroacoustic determination sub-module. The extraction sub-module is used to extract an original fundamental frequency of the voice audio data. The correction sub-module is used to correct the original fundamental frequency to obtain a first fundamental frequency. The adjustment sub-module is used to adjust, according to a pre-determined electroacoustic parameter, the first fundamental frequency to obtain a second fundamental frequency. The quantization sub-module is used to perform quantization processing on the second fundamental frequency to obtain a third fundamental frequency. The electroacoustic determination sub-module is used to determine the electroacoustic voice data according to the third fundamental frequency.

According to an embodiment of the present disclosure, the correction sub-module may include a segmentation unit, an energy determination unit, a zero-crossing rate determination unit, a voiced determination unit and a correction unit. The segmentation unit is used to divide the voice audio data into a plurality of audio segments. The energy determination unit is used to determine, for each audio segment of the plurality of audio segments, an energy of the audio segment. The zero-crossing rate determination unit is used to determine, for each audio segment of the plurality of audio segments, a zero-crossing rate of the audio segment. The voiced determination unit is used to determine, according to the energy of the audio segment and the zero-crossing rate of the audio segment, whether the audio segment is a voiced audio segment or not. The correction unit is used to correct a fundamental frequency of the voiced audio segment by using a linear interpolation algorithm.

According to an embodiment of the present disclosure, the audio segment includes a plurality of sampling points. The energy determination unit is further used to determine the energy of the audio segment according to a value of each sampling point in the audio segment.

According to an embodiment of the present disclosure, the zero-crossing rate determination unit is further used to determine, for every set of two adjacent sampling points in the audio segment, whether a value of one of the two adjacent sampling points has a sign opposite to a sign of a value of the other one of the two adjacent sampling points, and then determine a ratio of a number of sets of two adjacent sampling points having values of opposite signs to a total number of the sampling points in the audio segment as the zero-crossing rate.

According to an embodiment of the present disclosure, the pre-determined electroacoustic parameter may include the electroacoustic degree parameter and/or the electroacoustic tone parameter. The adjustment sub-module may include a first determination unit, a second determination unit and an adjustment unit. The first determination unit is used to determine, according to the fundamental frequency of the voiced audio segment, a fundamental frequency variance and/or a fundamental frequency mean value. The second determination unit is used to determine a corrected fundamental frequency variance according to the electroacoustic degree parameter and the fundamental frequency variance, and/or determine a corrected fundamental frequency mean value according to the electroacoustic tone parameter and the fundamental frequency mean value. The adjustment unit is used to adjust, according to the corrected fundamental frequency variance and/or the corrected fundamental frequency mean value, the first fundamental frequency to obtain the second fundamental frequency.

According to an embodiment of the present disclosure, the quantization sub-module may include a frequency range determination unit and a third fundamental frequency determination unit.

The frequency range determination unit is used to determine a frequency range according to:

$$\text{scale} = 1 + 12 * log_2(\frac{F0'}{27.5}),$$

wherein scale is the frequency range, and $F0'$ is the second fundamental frequency.

The third fundamental frequency determination unit is used to determine, based on the frequency range, the third fundamental frequency according to:

$$F0'' = 27.5 * 2^{(\frac{scale-1}{12})},$$

wherein F0" is the third fundamental frequency.

According to an embodiment of the present disclosure, the above-mentioned apparatus of processing audio data may further include a determination module, which is used to determine a spectral envelope and an aperiodic parameter according to the voice audio data and the first fundamental frequency.

According to an embodiment of the present disclosure, the electroacoustic determination sub-module is further used to determine the electroacoustic voice data according to the third fundamental frequency, the spectral envelope and the aperiodic parameter.

According to an embodiment of the present disclosure, the present disclosure further provides an electronic device, a readable storage medium, and a computer program product.

FIG. 6 shows a schematic block diagram of an exemplary electronic device 600 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the device 600 may include a computing unit 601, which may perform various appropriate actions and processing based on a computer program stored in a read-only memory (ROM) 602 or a computer program loaded from a storage unit 608 into a random access memory (RAM) 603. Various programs and data required for the operation of the device 600 may be stored in the RAM 603. The computing unit 601, the ROM 602 and the RAM 603 are connected to each other through a bus 604. An input/output (I/O) interface 605 is further connected to the bus 604.

Various components in the device 600, including an input unit 606 such as a keyboard, a mouse, etc., an output unit 607 such as various types of displays, speakers, etc., a storage unit 608 such as a magnetic disk, an optical disk, etc., and a communication unit 609 such as a network card, a modem, a wireless communication transceiver, etc., are connected to the I/O interface 605. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 601 may perform the various methods and processes described above, such as the method of processing audio data. For example, in some embodiments, the method of processing audio data may be implemented as a computer software program that is tangibly contained on a machine-readable medium, such as a storage unit 608. In some embodiments, part or all of a computer program may be loaded and/or installed on the device 600 via the ROM 602 and/or the communication unit 609. When the computer program is loaded into the RAM 603 and executed by the computing unit 601, one or more steps of the method of processing audio data described above may be performed. Alternatively, in other embodiments, the computing unit 601 may be configured to perform the method of processing audio data in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

The above-mentioned specific embodiments do not constitute a limitation on the scope of protection of the present disclosure. Those skilled in the art should understand that various modifications, combinations, sub-combinations and substitutions may be made according to design requirements and other factors.

**Claims**

**1.** A method (100) of processing audio data, comprising:

decomposing (S110) original audio data to obtain voice audio data and background audio data;
performing (S120) electroacoustic processing on the voice audio data to obtain electroacoustic voice data; and
combining (S130) the electroacoustic voice data and the background audio data to obtain target audio data,
wherein the performing electroacoustic processing on the voice audio data to obtain electroacoustic voice data comprises:

extracting (S321) an original fundamental frequency of the voice audio data;
correcting (S322) the original fundamental frequency to obtain a first fundamental frequency;

adjusting (S323), according to a pre-determined electroacoustic parameter, the first fundamental frequency to obtain a second fundamental frequency, wherein the pre-determined electroacoustic parameter comprises at least one of an electroacoustic degree parameter or an electroacoustic tone parameter, the electroacoustic degree parameter is used to control an electroacoustic degree, and the electroacoustic tone parameter is used to control a tone;

performing (S324) quantization processing on the second fundamental frequency to obtain a third fundamental frequency; and

determining (S325) the electroacoustic voice data according to the third fundamental frequency,

wherein the correcting the original fundamental frequency to obtain a first fundamental frequency comprises:

dividing the voice audio data into a plurality of audio segments;

determining, for each audio segment of the plurality of audio segments, an energy of the audio segment and a zero-crossing rate of the audio segment;

determining, according to the energy of the audio segment and the zero-crossing rate of the audio segment, whether the audio segment is a voiced audio segment or not; and

correcting a fundamental frequency of the voiced audio segment by using a linear interpolation algorithm,

wherein the adjusting, according to a pre-determined electroacoustic parameter, the first fundamental frequency to obtain a second fundamental frequency comprises:

determining, according to the fundamental frequency of the voiced audio segment, a fundamental frequency variance and/or a fundamental frequency mean value;

determining a corrected fundamental frequency variance according to the electroacoustic degree parameter and the fundamental frequency variance, and/or determining a corrected fundamental frequency mean value according to the electroacoustic tone parameter and the fundamental frequency mean value; and

adjusting, according to the corrected fundamental frequency variance and/or the corrected fundamental frequency mean value, the first fundamental frequency to obtain the second fundamental frequency,

wherein the performing quantization processing on the second fundamental frequency to obtain a third fundamental frequency comprises:

determining a frequency range according to:

$$\text{scale} = 1 + 12 * log_2(\frac{F0'}{27.5}),$$

wherein scale is the frequency range, and $F0'$ is the second fundamental frequency; and

determining, based on the frequency range, the third fundamental frequency according to:

$$F0'' = 27.5 * 2^{(\frac{scale-1}{12})},$$

wherein $F0''$ is the third fundamental frequency.

2. The method (100) according to claim 1, wherein the decomposing original audio data to obtain voice audio data and background audio data comprises:

determining (S211) original Mel-spectrogram data corresponding to the original audio data;

determining (S212), by using a neural network, background Mel-spectrogram data corresponding to the original Mel-spectrogram data and voice Mel-spectrogram data corresponding to the original Mel-spectrogram data; and

generating (S213) the background audio data according to the background Mel-spectrogram data, and generating the voice audio data according to the voice Mel-spectrogram data.

3. The method (100) according to claim 1, wherein the audio segment comprises a plurality of sampling points, and the determining an energy of the audio segment comprises:
determining the energy of the audio segment according to a value of each sampling point in the audio segment.

4. The method (100) according to claim 1, wherein the audio segment comprises a plurality of sampling points, and the determining a zero-crossing rate of the audio segment comprises:

determining, for every set of two adjacent sampling points in the audio segment, whether a value of one of the two adjacent sampling points has a sign opposite to a sign of a value of the other one of the two adjacent sampling points; and
determining a ratio of a number of sets of two adjacent sampling points having values of opposite signs to a total number of the sampling points in the audio segment as the zero-crossing rate.

5. The method (100) according to claim 1 or 3 or 4, further comprising:

determining a spectral envelope and an aperiodic parameter according to the voice audio data and the first fundamental frequency,
wherein the determining the electroacoustic voice data according to the third fundamental frequency comprises:
determining the electroacoustic voice data according to the third fundamental frequency, the spectral envelope and the aperiodic parameter.

6. An electronic device (600), comprising:

at least one processor; and
a memory communicatively connected to the at least one processor, wherein the memory stores instructions executable by the at least one processor, and the instructions, when executed by the at least one processor, cause the at least one processor to implement the method of any one of claims 1 to 5.

7. A non-transitory computer-readable storage medium (608) having computer instructions therein, wherein the computer instructions are configured to cause a computer to implement the method of any one of claims 1 to 5.

8. A computer program product containing a computer program or instructions, wherein the computer program or the instructions, when executed by a processor, causes or cause the processor to implement the method of any one of claims 1 to 5.

**Patentansprüche**

1. Verfahren (100) zum Verarbeiten von Audiodaten, das folgende Schritte aufweist:

Zerlegen (S110) von Originalaudiodaten, um Sprachaudiodaten und Hintergrundaudiodaten zu erhalten;
Durchführen (S120) einer elektroakustischen Verarbeitung an den Sprachaudiodaten, um elektroakustische Sprachdaten zu erhalten; und
Kombinieren (S130) der elektroakustischen Sprachdaten und der Hintergrundaudiodaten, um Zielaudiodaten zu erhalten,
wobei das Durchführen einer elektroakustischen Verarbeitung an den Sprachaudiodaten, um elektroakustische Sprachdaten zu erhalten, folgende Schritte aufweist:

Extrahieren (S321) einer Originalgrundfrequenz der Sprachaudiodaten;
Korrigieren (S322) der Originalgrundfrequenz, um eine erste Grundfrequenz zu erhalten;
Anpassen (S323), gemäß einem vorbestimmten elektroakustischen Parameter, der ersten Grundfrequenz, um eine zweite Grundfrequenz zu erhalten, wobei der vorbestimmte elektroakustische Parameter einen elektroakustischen Gradparameter und/oder einen elektroakustischen Tonparameter aufweist, wobei der elektroakustische Gradparameter dazu verwendet wird, einen elektroakustischen Grad zu steuern, und der elektroakustische Tonparameter dazu verwendet wird, einen Ton zu steuern;
Durchführen (S324) einer Quantisierungsverarbeitung an der zweiten Grundfrequenz, um eine dritte Grundfrequenz zu erhalten; und
Bestimmen (S325) der elektroakustischen Sprachdaten gemäß der dritten Grundfrequenz,
wobei das Korrigieren der Originalgrundfrequenz, um eine erste Grundfrequenz zu erhalten, folgende

13

Schritte aufweist:

Unterteilen der Sprachaudiodaten in eine Mehrzahl von Audiosegmenten;
Bestimmen, für jedes Audiosegment der Mehrzahl von Audiosegmenten, einer Energie des Audiosegments und einer Nulldurchgangsrate des Audiosegments;
Bestimmen, gemäß der Energie des Audiosegments und der Nulldurchgangsrate des Audiosegments, ob das Audiosegment ein Sprach-Audiosegment ist oder nicht; und
Korrigieren einer Grundfrequenz des Sprach-Audiosegments unter Verwendung eines linearen Interpolationsalgorithmus,
wobei das Anpassen, gemäß einem vorbestimmten elektroakustischen Parameter, der ersten Grundfrequenz, um eine zweite Grundfrequenz zu erhalten, folgende Schritte aufweist:

Bestimmen, gemäß der Grundfrequenz des Sprach-Audiosegments, einer Grundfrequenzvarianz und/oder eines Grundfrequenzmittelwerts;
Bestimmen einer korrigierten Grundfrequenzvarianz gemäß dem elektroakustischen Gradparameter und der Grundfrequenzvarianz und/oder Bestimmen eines korrigierten Grundfrequenzmittelwerts gemäß dem elektroakustischen Tonparameter und dem Grundfrequenzmittelwert; und
Anpassen, gemäß der korrigierten Grundfrequenzvarianz und/oder dem korrigierten Grundfrequenzmittelwert, der ersten Grundfrequenz, um die zweite Grundfrequenz zu erhalten,
wobei das Durchführen einer Quantisierungsverarbeitung an der zweiten Grundfrequenz, um eine dritte Grundfrequenz zu erhalten, folgende Schritte aufweist:
Bestimmen eines Frequenzbereichs gemäß:

$$\text{scale} = 1 + 12 * \log_2\left(\frac{F0'}{27,5}\right),$$

wobei scale der Frequenzbereich ist und *F*0' die zweite Grundfrequenz ist; und
Bestimmen, basierend auf dem Frequenzbereich, der dritten Grundfrequenz gemäß:

$$F0'' = 27,5 * 2^{\left(\frac{\text{scale}-1}{12}\right)},$$

wobei F0" die dritte Grundfrequenz ist.

2. Verfahren (100) gemäß Anspruch 1, bei dem das Zerlegen von Originalaudiodaten, um Sprachaudiodaten und Hintergrundaudiodaten zu erhalten, folgende Schritte aufweist:

Bestimmen (S211) von Original-Mel-Spektrogrammdaten, die den Originalaudiodaten entsprechen;
Bestimmen (S212), unter Verwendung eines neuronalen Netzwerks, von Hintergrund-Mel-Spektrogrammdaten, die den Original-Mel-Spektrogrammdaten entsprechen, und von Sprach-Mel-Spektrogrammdaten, die den Original-Mel-Spektrogrammdaten entsprechen; und
Erzeugen (S213) der Hintergrundaudiodaten gemäß den Hintergrund-Mel-Spektrogrammdaten und Erzeugen der Sprachaudiodaten gemäß den Sprach-Mel-Spektrogrammdaten.

3. Verfahren (100) gemäß Anspruch 1, bei dem das Audiosegment eine Mehrzahl von Abtastpunkten aufweist und das Bestimmen einer Energie des Audiosegments folgenden Schritt aufweist:

Bestimmen der Energie des Audiosegments gemäß einem Wert jedes Abtastpunkts in dem Audiosegment.

4. Verfahren (100) gemäß Anspruch 1, bei dem das Audiosegment eine Mehrzahl von Abtastpunkten aufweist und das Bestimmen einer Nulldurchgangsrate des Audiosegments folgende Schritte aufweist:

Bestimmen für jeden Satz von zwei benachbarten Abtastpunkten in dem Audiosegment, ob ein Wert eines der zwei benachbarten Abtastpunkte ein Vorzeichen hat,
das entgegengesetzt zu einem Vorzeichen eines Werts des anderen der zwei benachbarten Abtastpunkte ist; und
Bestimmen eines Verhältnisses einer Anzahl von Sätzen von zwei benachbarten Abtastpunkten mit Werten entgegengesetzter Vorzeichen zu einer Gesamtzahl der Abtastpunkte in dem Audiosegment als die Nulldurchgangsrate.

5. Verfahren (100) gemäß Anspruch 1 oder 3 oder 4, das ferner folgenden Schritt aufweist:

Bestimmen einer spektralen Hüllkurve und eines aperiodischen Parameters gemäß den Sprachaudiodaten und der ersten Grundfrequenz,
wobei das Bestimmen der elektroakustischen Sprachdaten gemäß der dritten Grundfrequenz folgenden Schritt aufweist: Bestimmen der elektroakustischen Sprachdaten gemäß der dritten Grundfrequenz, der spektralen Hüllkurve und dem aperiodischen Parameter.

6. Elektronische Vorrichtung (600), die folgende Merkmale aufweist:

zumindest einen Prozessor; und
einen Speicher, der kommunikativ mit dem zumindest einen Prozessor verbunden ist, wobei der Speicher Anweisungen speichert, die durch den zumindest einen Prozessor ausführbar sind, und die Anweisungen, wenn sie durch den zumindest einen Prozessor ausgeführt werden, den zumindest einen Prozessor dazu veranlassen, das Verfahren gemäß einem der Ansprüche 1 bis 5 zu implementieren.

7. Nichtflüchtiges computerlesbares Speichermedium (608) mit Computeranweisungen in demselben, wobei die Computeranweisungen dazu konfiguriert sind, einen Computer dazu zu veranlassen, das Verfahren gemäß einem der Ansprüche 1 bis 5 zu implementieren.

8. Computerprogrammprodukt, das ein Computerprogramm oder Anweisungen enthält, wobei das Computerprogramm oder die Anweisungen, bei Ausführung durch einen Prozessor, den Prozessor dazu veranlasst oder veranlassen, das Verfahren gemäß einem der Ansprüche 1 bis 5 zu implementieren.

**Revendications**

1. Procédé (100) de traitement de données audio, comprenant :

décomposer (S110) les données audio originales pour obtenir des données audio vocales et des données audio d'arrière-plan ;
effectuer (S120) un traitement électroacoustique sur les données audio vocales afin d'obtenir des données vocales électroacoustiques ; et
combiner (S130) les données vocales électroacoustiques et les données audio d'arrière-plan pour obtenir les données audio cibles,
dans lequel le fait d'effectuer un traitement électroacoustique des données audio vocales pour obtenir des données vocales électroacoustiques comprend :

extraire (S321) une fréquence fondamentale originale des données audio vocales ;
corriger (S322) la fréquence fondamentale d'origine pour obtenir une première fréquence fondamentale ;
ajuster (S323), selon un paramètre électroacoustique prédéterminé, la première fréquence fondamentale afin d'obtenir une deuxième fréquence fondamentale, dans lequel le paramètre électroacoustique prédéterminé comprend au moins l'un parmi un paramètre de degré électroacoustique et un paramètre de tonalité électroacoustique, le paramètre de degré électroacoustique étant utilisé pour contrôler un degré électroacoustique, et le paramètre de tonalité électroacoustique étant utilisé pour contrôler une tonalité ;
effectuer (S324) un traitement de quantification sur la deuxième fréquence fondamentale afin d'obtenir une troisième fréquence fondamentale ; et
déterminer (S325) les données vocales électroacoustiques en fonction de la troisième fréquence fondamentale,
dans lequel la correction de la fréquence fondamentale d'origine pour obtenir une première fréquence fondamentale comprend :

diviser les données audio vocales en une pluralité de segments audio ;
déterminer, pour chaque segment audio parmi la pluralité de segments audio, une énergie du segment audio et un taux de passage à zéro du segment audio ;

déterminer, en fonction de l'énergie du segment audio et du taux de passage à zéro du segment audio, si le segment audio est un segment audio vocal ou non ; et

corriger une fréquence fondamentale du segment audio vocalisé à l'aide d'un algorithme d'interpolation linéaire,

dans lequel l'ajustement, selon un paramètre électroacoustique prédéterminé, de la première fréquence fondamentale pour obtenir une deuxième fréquence fondamentale comprend :

déterminer, en fonction de la fréquence fondamentale du segment audio vocalisé, une variance de fréquence fondamentale et/ou une valeur moyenne de fréquence fondamentale ;

déterminer une variance corrigée de la fréquence fondamentale en fonction du paramètre de degré électroacoustique et de la variance de la fréquence fondamentale, et/ou déterminer une valeur moyenne corrigée de la fréquence fondamentale en fonction du paramètre de tonalité électroacoustique et de la valeur moyenne de la fréquence fondamentale ; et

ajuster, en fonction de la variance corrigée de la fréquence fondamentale et/ou de la valeur moyenne corrigée de la fréquence fondamentale, la première fréquence fondamentale afin d'obtenir la deuxième fréquence fondamentale,

dans lequel le traitement de quantification effectué sur la deuxième fréquence fondamentale pour obtenir une troisième fréquence fondamentale comprend :

déterminer une plage de fréquences selon :

$$\text{scale} = 1 + 12 * \log_2\left(\frac{F0'}{27.5}\right),$$

dans lequel scale est la plage de fréquences, et $F0'$ est la deuxième fréquence fondamentale ; et déterminer, sur la base de la plage de fréquences, la troisième fréquence fondamentale selon :

$$F0'' = 27.5 * 2^{\left(\frac{Scale-1}{12}\right)},$$

dans lequel F0" est la troisième fréquence fondamentale.

2. Procédé (100) selon la revendication 1, dans lequel la décomposition des données audio originales pour obtenir des données audio vocales et des données audio d'arrière-plan comprend :

déterminer (S211) les données spectrogrammes Mel originales correspondant aux données audio originales ;
déterminer (S212), à l'aide d'un réseau neuronal, les données du spectrogramme Mel d'arrière-plan correspondant aux données du spectrogramme Mel d'origine et les données du spectrogramme Mel vocal correspondant aux données du spectrogramme Mel d'origine ; et
générer (S213) les données audio d'arrière-plan en fonction des données du spectrogramme Mel d'arrière-plan, et générer les données audio vocales en fonction des données du spectrogramme Mel vocal.

3. Procédé (100) selon la revendication 1, dans lequel le segment audio comprend une pluralité de points d'échantillonnage, et la détermination d'une énergie du segment audio comprend :
déterminer l'énergie du segment audio en fonction d'une valeur de chaque point d'échantillonnage dans le segment audio.

4. Procédé (100) selon la revendication 1, dans lequel le segment audio comprend une pluralité de points d'échantillonnage, et la détermination d'un taux de passage à zéro du segment audio comprend :

déterminer, pour chaque ensemble de deux points d'échantillonnage adjacents dans le segment audio, si une valeur de l'un des deux points d'échantillonnage adjacents a un signe opposé à un signe de la valeur de l'autre des deux points d'échantillonnage adjacents ; et
déterminer un rapport entre un nombre d'ensembles de deux points d'échantillonnage adjacents ayant des valeurs de signes opposés et un nombre total de points d'échantillonnage dans le segment audio comme taux de passage à zéro.

**5.** Procédé (100) selon la revendication 1 ou 3 ou 4, comprenant en outre :

déterminer une enveloppe spectrale et un paramètre apériodique en fonction des données audio vocales et de la première fréquence fondamentale,
dans lequel la détermination des données vocales électroacoustiques en fonction de la troisième fréquence fondamentale comprend : la détermination des données vocales électroacoustiques en fonction de la troisième fréquence fondamentale, de l'enveloppe spectrale et du paramètre apériodique.

**6.** Dispositif électronique (600), comprenant :

au moins un processeur ; et
une mémoire connectée de manière communicative à l'au moins un processeur, dans laquelle la mémoire stocke des instructions exécutables par l'au moins un processeur, et les instructions, lorsqu'elles sont exécutées par l'au moins un processeur, amènent l'au moins un processeur à mettre en œuvre le procédé selon l'une quelconque des revendications 1 à 5.

**7.** Support de stockage non transitoire lisible par ordinateur (608) contenant des instructions informatiques sur celui-ci, dans lequel les instructions informatiques sont configurées pour amener un ordinateur à mettre en œuvre le procédé selon l'une quelconque des revendications 1 à 5.

**8.** Produit de programme informatique contenant un programme informatique ou des instructions, dans lequel le programme informatique ou les instructions, lorsqu'ils sont exécutés par un processeur, amènent le processeur à mettre en œuvre le procédé selon l'une quelconque des revendications 1 à 5.

<u>100</u>

| Original audio data is decomposed to obtain voice audio data and background audio data | ~S110 |

↓

| Electroacoustic processing is performed on the voice audio data to obtain electroacoustic voice data | ~S120 |

↓

| The electroacoustic voice data and the background audio data are combined to obtain target audio data | ~S130 |

FIG. 1

<u>210</u>

| Original Mel-spectrogram data corresponding to the original audio data is determined | ~S211 |

↓

| Background Mel-spectrogram data corresponding to the original Mel-spectrogram data and voice Mel-spectrogram data corresponding to the original Mel-spectrogram data are determined by using a neural network | ~S212 |

↓

| The background audio data is generated according to the background Mel-spectrogram data, and the voice audio data is generated according to the voice Mel-spectrogram data | ~S213 |

FIG. 2

320

An original fundamental frequency of the voice audio data is extracted ⌐S321

The original fundamental frequency is corrected to obtain a first fundamental frequency ⌐S322

The first fundamental frequency is adjusted according to a pre-determined electroacoustic parameter to obtain a second fundamental frequency ⌐S323

Quantization processing is performed on the second fundamental frequency to obtain a third fundamental frequency ⌐S324

The electroacoustic voice data is determined according to the third fundamental frequency ⌐S325

FIG. 3

FIG. 4

500

Decomposition module — 510

Electroacoustic processing module — 520

Synthesis module — 530

FIG. 5

600

Computing unit — 601

ROM — 602

RAM — 603

604

I/O interface — 605

Input unit — 606

Output unit — 607

Storage unit — 608

Communic -ation unit — 609

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007027682 A1

**Non-patent literature cited in the description**

- Singing voice analysis and editing based on mutually dependent F0 estimation and source separation. **IKEMIYA YUKARA et al.** 2015 IEEE INTERNATIONAL CONFERENCE ON ACOUSTICS. SPEECH AND SIGNAL PROCESSING (ICASSP). IEEE, 19 April 2015, 574-578

- Voice Anonymization in Urban Sound Recordings. **COHEN-HAORIA ALICE et al.** 2019 IEEE 29TH INTERNATIONAL WORKSHOP ON MACHINE LEARNING FOR SIGNAL PROCESSING (MLSP). IEEE, 13 October 2019, 1-6

- Deep Clustering and Conventional Networks for Music Separation: Stronger Together. **YI LUO et al.** ARXIVORG. CORNELL UNIVERSITY LIBRARY, 18 November 2016